# EUROPÄISCHE PATENTANMELDUNG

(11) **EP 3 812 714 A1**
(43) Veröffentlichungstag der Anmeldung: **28.04.2021**
(21) Anmeldenummer: 20196491.3
(22) Anmeldetag: 16.09.2020
(51) Int. Cl.: G01F 23/20, G01F 25/00, G01G 17/04

(54) **VERFAHREN UND VORRICHTUNG ZUR BETANKUNG EINES DRUCKSPEICHERS, INSBESONDERE DES DRUCKSPEICHERS EINES FAHRZEUGES, MIT UNTER DRUCK STEHENDEM UND AUS MINDESTENS EINEM VORRATSBEHÄLTER ENTNEHMBAREM WASSERSTOFF**

(30) Priorität: 25.10.2019 DE 102019128890
(71) Anmelder: Deutsche Bahn AG, 10785 Berlin (DE)
(72) Erfinder: Milella, Vito, 96110 Schesslitz (DE)

(57) **Zusammenfassung**

Die Erfindung betrifft ein Verfahren zur Betankung eines Druckspeichers, insbesondere des Druckspeichers eines Fahrzeuges, mit unter Druck stehendem und aus mindestens einem Vorratsbehälter (1, 2, 3) entnehmbarem Wasserstoff sowie eine entsprechende Vorrichtung zur Betankung eines Druckspeichers. Diese sollen eine genauere und eichfähige Messung der getankten Menge an Wasserstoff ermöglichen. Dies wird in verfahrensorientierter Weise dadurch erreicht, dass
▪ durch ein erstes Verwiegen des mindestens einen Vorratsbehälters (1, 2, 3) mit dem darin zu einem ersten Zeitpunkt befindlichen Wasserstoff mittels einer Wägezelle (4) ein austarierter erster Befüllungszustand ermittelt wird,
▪ durch ein zweites Verwiegen des mindestens einen Vorratsbehälters mit dem darin zu einem zweiten Zeitpunkt befindlichen Wasserstoff ein zweiter Befüllungszustand ermittelt wird,
▪ sowie die Massendifferenz des im mindestens einen Vorratsbehälter befindlichen Wasserstoffs zwischen erstem und zweitem Befüllungszustand ermittelt wird.

## Beschreibung

Die Erfindung betrifft ein Verfahren zur Betankung eines Druckspeichers, insbesondere des Druckspeichers eines Fahrzeuges, mit unter Druck stehendem und aus mindestens einem Vorratsbehälter entnehmbarem Wasserstoff.
Ferner betrifft die Erfindung eine Vorrichtung zur Betankung eines Druckspeichers, insbesondere des Druckspeichers eines Fahrzeuges, mit unter Druck stehendem Wasserstoff, umfassend Mittel zum Bereitstellen von unter Druck stehendem Wasserstoff in mindestens einem zur Entnahme von Wasserstoff eingerichteten Vorratsbehälter.

Derzeit erfolgt die Betankung von Fahrzeugen mit Wasserstoff aus Vorratsbehältern unter einem Druck von 70 MPa (Betankung von kleinen Fahrzeugen, wie z.B. PKW) bzw. 35 MPa (zur Betankung größerer Fahrzeuge, wie z.B. LKW oder Schienenfahrzeuge). Die Durchflußmenge des Wasserstoffs wird dabei mittels Vortex-Durchflußmessern, Coriolis-Massendurchflußmessern oder mittels Differenzdruckmessung ermittelt. Hierzu alternativ ist z.B. aus der DE 23 11 103 A ein Verfahren bekannt, bei dem aus der von einem strömenden Fluid auf einen temperaturabhängigen Meßwiderstand ausgeübten Erwärmungs- bzw. Kühlwirkung die Strömungsgeschwindigkeit des Fluids ermittelt und damit indirekt auf das Durchflußvolumen geschlossen wird. Aus der DE 10 2016 105 501 A1 ist Verfahren zur Durchflußmessung von Fluiden bzw. Gasen mittels thermischer Massenstrommessung bekannt. Alle diese Verfahren weisen bei den vorgenannten Druckniveaus, wie sie für die Betankung von Fahrzeugen mit Wasserstoff zur Anwendung kommen, relativ große Meßungenauigkeiten auf. Somit kommt es beispielsweise bei einem typischen Betankungsvorgang eines herkömmlichen Personenkraftwagens (PKW) zu einer Meßungenauigkeit von ca. 10%. Bei einer für einen solchen Betankungsvorgang typischen Abgabemenge von ca. 5 kg bedeutet dies einen beträchtlichen Fehler in Höhe von 0,5 kg. Auch bei Betankungsvorgängen mit niedrigeren Betankungsdrücken von 35 MPa beträgt die Meßgenauigkeit der bekannten Verfahren lediglich ca. 95 %. Derart hohe Meßungenauigkeiten sind unbefriedigend und verringern die allgemeine Akzeptanz von Wasserstoff als Antriebsmedium für Kraftmaschinen.

Bislang ist bei der Betankung von Druckspeichern (beispielsweise von Fahrzeugen mit Wasserstoff-Antrieb) mit unter Druck stehendem und aus mindestens einem Vorratsbehälter entnehmbarem Wasserstoff die Ermittlung der getankten Menge von Wasserstoff nicht hinreichend genau und in eichfähiger Weise möglich.

Der Erfindung liegt daher die Aufgabe zugrunde, ein Verfahren zur Betankung eines Druckspeichers, insbesondere des Druckspeichers eines Fahrzeuges, mit unter Druck stehendem und aus mindestens einem Vorratsbehälter entnehmbarem Wasserstoff sowie eine entsprechende Vorrichtung zur Betankung eines Druckspeichers bereitzustellen, welche eine genauere und eichfähige Messung der getankten Menge an Wasserstoff ermöglicht.

Dies wird erfindungsgemäß in verfahrensorientierter Weise dadurch gelöst, dass
▪ durch ein erstes Verwiegen des mindestens einen Vorratsbehälters mit dem darin zu einem ersten Zeitpunkt befindlichen Wasserstoff ein austarierter erster Befüllungszustand ermittelt wird,
▪ durch ein zweites Verwiegen des mindestens einen Vorratsbehälters mit dem darin zu einem zweiten Zeitpunkt befindlichen Wasserstoff ein zweiter Befüllungszustand ermittelt wird,
▪ sowie die Massendifferenz des im mindestens einen Vorratsbehälter befindlichen Wasserstoffs zwischen erstem und zweitem Befüllungszustand ermittelt wird.

Auf diese Weise ist ein gattungsgemäßes Betankungsverfahren realisierbar, bei dem die Ermittlung des im Zuge eines Betankungsvorgangs aus dem Vorratsbehälter entnommenen Wasserstoffs ausschließlich auf der Basis von Kraftmessungen erfolgt. Eine solche Kraftmessung ist unabhängig von den Eigenschaften bzw. Zuständen des Wasserstoffs (wie z.B. Druck, Volumen, Temperatur) und somit mit sehr hoher Genauigkeit jederzeit wiederholbar. Hierzu ist erfindungsgemäß vorgesehen, dass auf einer geeigneten Wägezelle bzw. Waage zu jeweils zwei verschiedenen Zeitpunkten die jeweilige Gesamtmasse des Vorratsbehälters sowie des in diesem zum ersten und zum zweiten Zeitpunkt bevorrateten Wasserstoffs gewogen und jeweils die Massedifferenz zwischen erstem und zweitem Zeitpunkt ermittelt werden. Im Zuge eines Betankungsvorgangs werden dabei für eine Vielzahl von Zeitintervallen, jeweils bezogen auf den ersten Zeitpunkt zu Beginn des Betankungsvorgangs (bzw. Startzeitpunkt) und den aktuellen zweiten Zeitpunkt während des Betankungsvorgangs (welcher zugleich auch der Endzeitpunkt des jeweiligen Zeitintervalls ist), die jeweiligen Massewerte bzw. Befüllungszustände bestimmt und hieraus der Gradient des Masseverlaufs zum zweiten Zeitpunkt bzw. die hieraus resultierende Durchflussmenge zum zweiten Zeitpunkt sowie durch Ermitteln der Massendifferenz zwischen erstem und zweitem Zeitpunkt die zum zweiten Zeitpunkt seit dem ersten Zeitpunkt (bzw. Startzeitpunkt) aus dem Vorratsbehälter entnommene Gesamtmenge an Wasserstoff ermittelt.
Es ist dabei zunächst ausreichend, wenn eine Tarierung des Befüllungszustandes nur zum ersten Zeitpunkt (bzw. Startzeitpunkt) erfolgt. Unter einer Tarierung ist in diesem Zusammenhang die Bereinigung des Meßergebnisses um die jeweilige Gewichtskraft des unbefüllten Vorratsbehälters zu verstehen. Für das Verwiegen zum jeweiligen zweiten Zeitpunkt bzw. zum Endzeitpunkt eines jeden Zeitintervalls ist keine Tarierung erforderlich, sofern sich hieran weitere Zeitintervalle desselben Betankungsvorgangs anschließen bzw. solange der Betankungsvorgang nicht beendet wird. Lediglich beim Abschluß des Betankungsvorgangs wird auch für das dann letzte Zeitintervall eine Tarierung des zweiten Befüllungszustands vorgenommen. Dies dient dazu, einen korrekten bzw. geeichten Endzustand und damit eine eichtechnische korrekte Gesamt-Entnahmemenge von Wasserstoff aus dem Vorratsbehälter zu ermitteln. Auf diese Weise ist die im Zuge des Betankungsvorgangs an den Abnehmer, z.B. ein Fahrzeug, abgegebene Menge an Wasserstoff auf direktem Wege als Massendifferenz zwischen einem austarierten ersten Zustand bzw. Startzustand (vor Beginn des Betankungsvorgangs) und einem austarierten zweiten Zustand bzw. Endzustand (nach Abschluß des Betankungsvorgangs) erfassbar.
Auf diese Weise wird ein Eingriff in die Leitungsführung bzw. in den Massestrom des Wasserstoffs zu Meßzwecken vermieden, so dass es beim erfindungsgemäßen Verfahren zu keinerlei messtechnisch verursachtem Druckabfall und damit einhergehenden Verfälschungen des Meßergebnisses kommt. Darüber hinaus ermöglicht das erfinderische Konzept eine wiederkehrende Eichung mittels Prüflingen.

Das erfinderische Grundkonzept ist dahingehend ausgelegt, dass die Massenermittlung eines Befüllungszustands des Vorratsbehälters zu beliebig häufigen Zeitpunkten während des Betankungsvorganges (beispielsweise zu einem ersten Startzeitpunkt vor Beginn des Betankungsvorgangs sowie beliebig häufigen aktuellen zweiten Zwischenzuständen während des Betankungsvorgangs) sowie die Ermittlung von Massendifferenzen zwischen den ersten und zweiten Zeitpunkten eines solchen durch den ersten und zweiten Zeitpunkt definierten Zeitintervalls vorgenommen werden, sodaß ein quasi-kontinuierliche Ermittlung der auf die Wägezelle wirkenden Gewichtskraft bzw. deren Änderungen und damit eine quasi-kontinuierliche Messung des Massendurchflusses während der Entnahme von Wasserstoff aus dem Vorratsbehälter ermöglicht wird. Hierdurch ist es auf einfache Weise möglich, einen Anwender dieses erfindungsgemäßen Verfahrens unter Zwischenschaltung einer visualisierenden Anzeige über den jeweils aktuellen Massendurchfluss sowie die Gesamtmasse bzw. -menge des seit dem Startzeitpunkt getankten Wasserstoff zu informieren.
Gemäß einer vereinfachten Ausführungsvariante der erfinderischen Grundidee ist vorgesehen, dass der Befüllungszustand vor Beginn des Betankungsvorgangs (bzw. Startzustand) und der Befüllungszustand nach Beendigung des Betankungsvorgangs (bzw. Endzustand) ermittelt werden. Somit wird also je Betankungsvorgang nur eine einmalige Ermittlung der Massendifferenz vorgenommen. Dies mag für vereinfachte Anwendungsfälle ausreichend sein.
Es ist dabei für das erfinderische Grundkonzept ohne Relevanz, ob die Betankung aus einem einzelnen Vorratsbehälter oder zeitgleich aus einer Mehrzahl von Vorratsbehältern erfolgt. Im letztgenannten Fall sieht die Erfindung eine gemeinsame Ermittlung der Befüllzustände aller Vorratsbehälter vor, indem beispielsweise sämtliche Vorratsbehälter jeweils gemeinsam verwogen werden.

In vorrichtungsorientierter Weise sieht die Erfindung zur Lösung der vorgenannten Aufgabenstellung eine Vorrichtung zur Betankung eines Druckspeichers vor, insbesondere des Druckspeichers eines Fahrzeuges, mit unter Druck stehendem Wasserstoff, umfassend Mittel zum Bereitstellen von unter Druck stehendem Wasserstoff in mindestens einem zur Entnahme von Wasserstoff eingerichteten Vorratsbehälter, welche ferner umfasst ▪
eine Wägezelle zum Verwiegen des mindestens einen Vorratsbehälters mit dem darin zu einem ersten Zeitpunkt befindlichen Wasserstoff und Ermitteln eines austarierten ersten Befüllungszustands sowie zum Verwiegen des Vorratsbehälters mit dem darin zu einem zweiten Zeitpunkt befindlichen Wasserstoff und Ermitteln eines zweiten Befüllungszustands
▪ sowie Mittel zur Ermittlung der Massendifferenz des im mindestens einen Vorratsbehälter befindlichen Wasserstoffs zwischen erstem und zweitem Befüllungszustand.
Die Wägezelle ist hierbei von den Mitteln zum Bereitstellen des Wasserstoffs bzw. den Mitteln zu dessen Entnahme aus dem Vorratsbehälter physisch getrennt. Auf diese Weise ist das Verwiegen des Vorratsbehälters ohne physischen Eingriff in das eigentliche Tanksystem (wie beispielsweise das Einbringen von Meßwiderständen in den Fluidstrom) möglich. Ebenso sind uneingeschränkt eichfähige Betankungsvorrichtungen für Wasserstoff realisierbar, bei denen das zu eichende Meßsystem und die Entnahme- bzw. Betankungvorrichtung strikt voneinander getrennt sind und bei der Vornahme einer Eichung keine Eingriffe in die Entnahme- bzw. Betankungsvorrichtung erforderlich sind.

Die Erfindung sieht ferner vor, dass die Vorrichtung ein Mittel zum Entlasten der Wägezelle vom Gewicht des mindestens einen Vorratsbehälters umfasst. Diese Mittel können gemäß einer ersten Ausgestaltungsvariante als Mittel zum vertikalen Anheben des mindestens einen Vorratsbehälters von der Wägezelle und gemäß einer zweiten Ausgestaltungsvariante als Mittel zum vertikalen Absenken der Wägezelle in Bezug auf den mindestens einen Vorratsbehälter ausgeführt sein. Dies kann beispielsweise mittels pneumatisch oder hydraulisch antreibbarer Verstellvorrichtungen realisiert werden, so dass elektrische Steuer- oder Antriebsströme im Nahbereich der mit Wasserstoff gefüllten Vorratsbehälter vermeidbar sind. Entscheidend ist in beiden Ausführungsvarianten, dass der Berührkontakt zwischen Vorratsbehälter und Wägezelle aufgehoben und zwischen beiden ein Freiraum in vertikaler Richtung geschaffen wird. In diesen Freiraum sind dann Prüfkörper zum Eichen der Wägezelle einbringbar und auf die Wägezelle auflegbar. Auf diese Weise ist die Wägezelle mittels vorgenannter Prüflinge auf eventuelle Wägefehler überprüfbar. Solche Wägefehler umfassen im Allgemeinen Offset- und Skalenfaktorfehler und können mittels an sich bekannter Verfahren, wie z.B. dem sog "least square"-Schätzverfahren (bzw. sog. "Methode der kleinsten Quadrate"), bestimmt werden.

Die Erfindung ist auch auf mehrstufige Vorrichtungen übertragbar, bei denen mehrere Druckstufen in unterschiedlichen Vorrichtungen bzw. Vorratsbehältern, die in überströmbarer Weise miteinander verbunden sind, zur Betankung bereitgestellt sind.

Die vorliegende Erfindung wird nachfolgend anhand eines Ausführungsbeispiels und dazugehöriger Zeichnung näher erläutert. Es zeigen
Figur 1: schematische Ansicht einer erfindungsgemäßen Betankungsvorrichtung zu Beginn eines Betankungsvorgangs
Figur 2: schematische Ansicht der erfindungsgemäßen Betankungsvorrichtung während des Betankungsvorgangs
Figur 3: schematische Ansicht der erfindungsgemäßen Betankungsvorrichtung nach Beendigung des Betankungsvorgangs

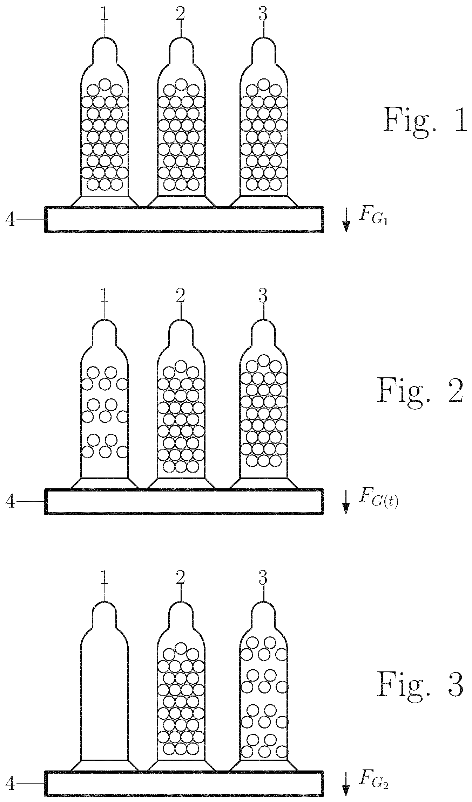

Die Betankungsvorrichtung umfasst drei Vorratsbehälter (1, 2, 3), welche zu Beginn des Betankungsvorgangs jeweils nahezu vollständig mit Wasserstoff gefüllt sind (was in Figur 1 durch die dichte Anordnung symbolhafter kugelförmiger Elemente, die den im Vorratsbehälter enthaltenen Wasserstoff symbolisieren, schematisch angedeutet ist). Alle Vorratsbehälter (1, 2, 3) sind auf einer gemeinsamen Wägezelle (4) angeordnet, welche die von allen drei Vorratsbehältern und den in diesen jeweils enthaltenen Mengen an Wasserstoff ausgeübte Gewichtskraft (F_{G}) registriert. Zu Beginn des Betankungsvorgangs wird hieraus die Gewichtskraft eines austarierten ersten Startzustands ermittelt (Figur 1).
Während des in Figur 2 dargestellten Betankungsvorgangs wird aus den Vorratsbehältern jeweils ein Massenstrom von Wasserstoff zur Betankung von Fahrzeugen entnommen. Hierzu werden für eine Vielzahl von Zeitpunkten während des Betankungsvorgangs die jeweiligen Massewerte bzw. Befüllungszustände bestimmt und hieraus der Gradient des Masseverlaufs bzw. die Durchflussmenge zum jeweiligen Zeitpunkt sowie die seit dem Startzeitpunkt aus dem Vorratsbehälter entnommene Gesamtmenge an Wasserstoff ermittelt.

Zu beliebig häufigen Zeitpunkten während des Betankungsvorganges werden die Massendifferenzen zwischen jeweils zwei Zuständen (beispielsweise zwischen dem ersten Startzustand vor Beginn des Betankungsvorgangs sowie dem jeweils aktuellen zweiten Zwischenzustand während des Betankungsvorgangs) ermittelt, sodaß ein quasi-kontinuierliche Ermittlung der auf die Wägezelle wirkenden Gewichtskraft bzw. deren Änderungen und damit eine quasi-kontinuierliche Messung des Massendurchflusses während der Entnahme von Wasserstoff aus dem Vorratsbehälter erfolgt.
Nach Beendigung des Betankungsvorgangs (Figur 3) weisen die Vorratsbehälter (2, 3) einen jeweils verringerten Inhalt an Wasserstoff auf bzw. sind vollständig entleert (Vorratsbehälter (1)), wobei sich die Befüllungszustände in den Vorratsbehältern unterscheiden können. Zum Abschluß des Betankungsvorgangs wird für das dann letzte Zeitintervall eine Tarierung des zweiten Befüllungszustands vorgenommen, so dass ein korrekter bzw. geeichter Endzustand und damit eine eichtechnische korrekte Gesamt-Entnahmemenge von Wasserstoff aus dem Vorratsbehälter ermittelbar sind. Die im Zuge des Betankungsvorgangs an das Fahrzeug abgegebene Menge an Wasserstoff ist auf direktem Wege als Massendifferenz zwischen dem austarierten Startzustand (vor Beginn des Betankungsvorgangs) und einem austarierten zweiten Zustand bzw. Endzustand (nach Abschluß des Betankungsvorgangs) erfassbar.

### Bezugszeichenliste:

- 1, 2, 3: Vorratsbehälter
- 4: Wägezelle
- F_{G}: Wirkrichtung der Gewichtskraft

## Patentansprüche

1. Verfahren zur Betankung eines Druckspeichers, insbesondere des Druckspeichers eines Fahrzeuges, mit unter Druck stehendem und aus mindestens einem Vorratsbehälter entnehmbarem Wasserstoff,
**dadurch gekennzeichnet, dass**
▪ durch ein erstes Verwiegen des mindestens einen Vorratsbehälters mit dem darin zu einem ersten Zeitpunkt befindlichen Wasserstoff ein austarierter erster Befüllungszustand ermittelt wird,
▪ durch ein zweites Verwiegen des mindestens einen Vorratsbehälters mit dem darin zu einem zweiten Zeitpunkt befindlichen Wasserstoff ein zweiter Befüllungszustand ermittelt wird,
▪ sowie die Massendifferenz des im mindestens einen Vorratsbehälter befindlichen Wasserstoffs zwischen erstem und zweitem Befüllungszustand ermittelt wird.

2. Vorrichtung zur Betankung eines Druckspeichers, insbesondere des Druckspeichers eines Fahrzeuges, mit unter Druck stehendem Wasserstoff, umfassend Mittel zum Bereitstellen von unter Druck stehendem Wasserstoff in mindestens einem zur Entnahme von Wasserstoff eingerichteten Vorratsbehälter (1, 2, 3),
**dadurch gekennzeichnet, dass** die Vorrichtung ferner umfasst
▪ eine Wägezelle (4) zum Verwiegen des mindestens einen Vorratsbehälters (1, 2, 3) mit dem darin zu einem ersten Zeitpunkt befindlichen Wasserstoff und Ermitteln eines austarierten ersten Befüllungszustands sowie zum Verwiegen des mindestens einen Vorratsbehälters (1, 2, 3) mit dem darin zu einem zweiten Zeitpunkt befindlichen Wasserstoff und Ermitteln eines zweiten Befüllungszustands
▪ sowie Mittel zur Ermittlung der Massendifferenz des im mindestens einen Vorratsbehälter (1, 2, 3) befindlichen Wasserstoffs zwischen erstem und zweitem Befüllungszustand.

3. Vorrichtung zur Betankung eines Druckspeichers gemäß Patentanspruch 2, **dadurch gekennzeichnet, dass** die Vorrichtung ferner ein Mittel zum Entlasten der Wägezelle (4) vom Gewicht des mindestens einen Vorratsbehälters (1, 2, 3) umfasst.
